# EUROPÄISCHE PATENTANMELDUNG

(11) **EP 3 034 476 A1**
(43) Veröffentlichungstag der Anmeldung: **22.06.2016**
(21) Anmeldenummer: 14198100.1
(22) Anmeldetag: 16.12.2014
(51) Int. Cl.: C03B 19/14, B01D 53/02, B01J 20/10

(54) **VERFAHREN ZUR HERSTELLUNG VON SYNTHETISCHEM QUARZGLAS UNTER VERWENDUNG EINER REINIGUNGSVORRICHTUNG**

(71) Anmelder: Heraeus Quarzglas GmbH & Co. KG, 63450 Hanau (DE)
(72) Erfinder: Laudahn, Hilmar, 06766 Bitterfeld-Wolfen (DE); Trommer, Martin, 06749 Bitterfeld (DE); Badeke, Klaus-Uwe, 06193 Petersberg-Sennewitz (DE)
(74) Vertreter: Gille Hrabal

(57) **Zusammenfassung**

Die vorliegende Erfindung betrifft ein Verfahren zur Herstellung von synthetischem Quarzglas durch Verdampfen einers Einsatzmaterials, das mindestens eine polymerisierbare Polyalkylsiloxanverbindung enthält, und durch Oxidation und/oder Hydrolyse des Einsatzmaterialdampfs. Das Verfahren enthält auch die Verwendung einer speziellen Reinigungsvorrichtung aus porösen Silica-Partikeln, um den Einsatzmaterialdampf zu reinigen. Die Erfindung betrifft auch eine Vorrichtung zur Herstellung von synthetischem Quarzglas, umfassend eine spezielle Reinigungsvorrichtung, die Verwendung einer Schüttung aus porösen Silica-Partikeln zur Reinigung eines Einsatzmaterialdampfes zur Herstellung von synthetischem Quarzglas sowie das synthetische Quarzglas, welches nach dem erfindungsgemäßen Verfahren erhalten wird.

## Beschreibung

Die vorliegende Erfindung betrifft ein Verfahren zur Herstellung von synthetischem Quarzglas unter Verwendung einer speziellen Reinigungsvorrichtung, eine Vorrichtung zur Herstellung von synthetischem Quarzglas, umfassend eine spezielle Reinigungsvorrichtung, die Verwendung einer Schüttung aus porösen Silica-Partikeln zur Reinigung eines Einsatzmaterialdampfes zur Herstellung von synthetischem Quarzglas sowie das synthetische Quarzglas, welches nach dem erfindungsgemäßen Verfahren erhalten wird.

Zur Herstellung von synthetischem Quarzglas werden aus einer siliziumhaltigen Ausgangssubstanz in einem CVD-Verfahren durch Hydrolyse oder Oxidation SiO₂-Partikel erzeugt und auf einem sich bewegenden Träger abgeschieden. Es kann dabei zwischen Außen- und Innenabscheideverfahren unterschieden werden. Bei Außenabscheideverfahren werden die SiO₂-Partikel auf der Außenseite eines rotierenden Trägers aufgebracht. Als Beispiele für entsprechende Außenabscheideverfahren seien das so genannte OVD-Verfahren (Outside Vapour Phase Deposition), das VAD-Verfahren (Vapour Phase Axial Deposition) oder das PECVD-Verfahren (Plasma Enhanced Chemical Vapour Deposition) genannt. Als bekanntestes Beispiel für ein Innenabscheideverfahren steht das MCVD-Verfahren (Modified Chemical Vapour Deposition), bei dem auf der Innenwandung eines von außen erhitzten Rohres SiO₂-Partikel abgeschieden werden.

Bei hinreichend hoher Temperatur im Bereich der Trägeroberfläche kommt es zu einem unmittelbaren Verglasen der SiO₂-Partikel, was auch als "Direktverglasen" bekannt ist. Im Unterschied dazu ist beim so genannten "Sootverfahren" die Temperatur beim Abscheiden der SiO₂-Partikel so niedrig, dass eine poröse SiO₂-Sootschicht erhalten wird, die dann in einem separaten Verfahrensschritt zu transparentem Quarzglas gesintert wird. Sowohl das Direktverglasen als auch das Sootverfahren führen zu einem dichten, transparenten, hochreinen, synthetischen Quarzglas.

Aus dem Stand der Technik ist als siliziumhaltiges Einsatzmaterial für die Herstellung von synthetischem Quarzglas beispielsweise Siliziumtetrachlorid (SiCl₄) bekannt. Siliziumtetrachlorid und andere analoge chlorhaltige Substanzen zeigen bei moderaten Temperaturen unter 100 °C bereits ausreichend hohe Dampfdrücke, so dass etwaige Verunreinigungen üblicherweise in der Flüssigphase verbleiben und die Herstellung von hochreinen Sootkörpern erleichtert wird.

Allerdings ist bekannt, dass bei der Verdampfung des Siliziumtetrachlorids teilweise Flüssigkeitstropfen mit dem verwendeten Inertgasstrom mitgerissen werden und bis zum Erreichen der Reaktionszone nicht vollständig verdampfen. Damit gelangen die in der Flüssigphase enthaltenen Verunreinigungen letztendlich dennoch in den Sootkörper und verschlechtern damit die Qualität des daraus hergestellten Quarzglases. Bei den Verunreinigungen handelt es sich normalerweise um Metalle.

Im Stand der Technik sind einige Verfahren bekannt, um die Verdampfung des Siliziumtetrachlorids noch in der Verdampfungszone zu vervollständigen, damit die genannten Verunreinigungen nicht in die Reaktionszone gelangen. So beschreibt beispielsweise die GB 1 559 978, dass der Einbau von Glaswolle im Verdampfer verhindert, dass die bei der Verdampfung gebildeten Tropfen in den Einsatzmaterialdampfstrom entweichen, da diese durch die Glaswolle zurückgehalten werden. Ein ähnlicher Ansatz wird in der US 4,212,663 beschrieben, wobei die hohe Oberfläche der nicht porösen Filterschicht gleichzeitig genutzt wird, um die Flüssigkeitstropfen zu verdampfen. Die EP 0 765 845 A1 beschreibt die Verwendung eines Filters, welcher Aktivkohle umfasst, zur Aufreinigung des Einsatzmaterialgasstroms. Hier wird im Gegensatz zu den zuvor genannten Verfahren der Dampf und nicht (auch) die Flüssigkeit mit dem Filter kontaktiert.

Allen diesen Verfahren ist gemeinsam, dass hier jeweils die Lösung der Aufgabe im Vordergrund steht, unverdampfte und mitgerissene Flüssigkeitstropfen in den jeweiligen Schichten zurückzuhalten, da unverdampfte Flüssigkeitstropfen in der Dampfleitung zu Fehlfunktionen am Brenner führen können (mit der Folge der Generierung von Defekten im Quarzglas, Beeinträchtigung der Brennereffizienz und Langzeitstabilität des Abscheideprozesses.

Ein wesentlicher Nachteil der chlorhaltigen Einsatzmaterialien wie Siliziumtetrachlorid ist jedoch, dass bei deren Umsetzung zu synthetischem Quarzglas Salzsäure entsteht, die hohe Kosten bei der Abgaswäsche und Entsorgung verursacht. Grundsätzlich werden daher beim Einsatz von SiCl₄ Vorrichtungen verwendet, welche den Eintrag von Feuchtigkeit vermeiden. Dies reduziert zum einen die Bildung von Salzsäure und zum anderen wird die Bildung von Kieselsäure vermieden. Diese Vorgehensweise ist dem Fachmann vertraut.

Um diese Anforderungen zu umgehen, wurde In der Vergangenheit eine Vielzahl sogenannter chlorfreier Organosiliziumverbindungen als Ausgangsmaterial für die Quarzglasherstellung erprobt. Als Beispiel seien Monosilane, Alkoxysilane, Siloxane und Silazane genannt. Eine besonders interessante Gruppe dieser sogenannten chlorfreien Organosiliziumverbindungen bilden die Polyalkylsiloxane (auch kurz als "Siloxane" bezeichnet), die beispielsweise aus der DE 30 16 010 A1 bekannt sind. Insbesondere die unter die Polyalkylsiloxane subsumierbaren zyklischen Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt. Aufgrund der großtechnischen Verfügbarkeit in hoher Reinheit wird insbesondere Octamethylcyclotetrasiloxan (OMCTS) eingesetzt.

Derartige Polyalkylsiloxanverbindungen sind polymerisierbar und liegen im Einsatzmaterial in Reinform oder als Gemisch mit anderen Komponenten typischerweise in flüssiger Form vor. Dabei können diese Verbindungen in Spuren auch polymerisierbare Silanole enthalten. Sie können dem Verbraucher, wie etwa einem Abscheidebrenner, in der flüssigen Form zugeführt werden und am Brennerausgang bzw. in der Flamme versprüht werden. In der Regel wird das flüssige Einsatzmaterial aber mittels eines Verdampfers in eine gasförmige oder dampfförmige Phase überführt und dem Verbraucher als kontinuierlicher Gasstrom über ein Leitungssystem zugeführt.

Basierend auf diesen sogenannten chlorfreien Ausgangsmaterialien sind in dem Stand der Technik einige Verfahren zur Herstellung von synthetischem Quarzglas beschrieben. Beispielsweise wird auf die Druckschriften EP 0 760 373 A, WO 99/15468 A, WO 99/54259 A, WO 2013/092553 A und EP 0 529 189 A verwiesen.

Im grundlegenden Unterschied zu den oben beschriebenen Verfahren, bei denen die niedermolekularen metallischen Verunreinigungen im Siliziumtetrachlorid die Qualität des resultierenden Quarzglases mindern und gleichzeitig der Eintrag von Feuchtigkeit vermieden wird, bringt die Verwendung von Polyalkylsiloxanen jedoch andere Problematiken in Bezug auf mögliche Einflüsse von Verunreinigungen des Ausgangsmaterials auf die Qualität des resultierenden Quarzglases mit sich. Grundsätzlich ist SiCl₄ thermisch stabiler als die cyclischen Polyalklysiloxane und ihr Siedepunkt ist viel niedriger. Dagegen regieren die cyclischen Polyalkylsiloxane bei Raumtemperatur nahezu nicht mit Feuchtigkeit. Eines der Hauptprobleme bei der Verwendung von cyclischen Polyalkylsiloxanen liegt jedoch darin, dass eine Polymerisationen und eine Gelbildung stattfinden. Wie oben bereits dargelegt, ist es bekannt, dass Polyalkylsiloxane in Spuren polare Verunreinigungen wie Wasser, Silanole und manchmal auch polymerisations-katalytisch wirkende Spurenbestandteile (z. B. Lewis Säuren oder Lewis-Basen) enthalten können. Diese Verunreinigungen können im Fall der Silanole unter Verdampfungsbedingungen entweder mit sich selbst unter Ausbildung von Polymeren reagieren oder mit der Ausgangsverbindung Ringöffnungsreaktionen initiieren, Dies führt letztlich zur Bildung der genannten polymeren Siloxanrückstände und Gele. Diese Polymere und Gele verbleiben üblicherweise im Verdampfer, in den Dampfleitungen, Regelventilen, Drosseln, sonstigen Gasdosiereinrichtungen und Leitungen zurück und konzentrieren sich hier auf. Dies kann zu einer massiven Beeinträchtigung des Regelverhaltens der Stoffströme führen. Eine reproduzierbare Prozessführung wird damit massiv erschwert. Im Extremfall führt dies sogar zu Verstopfungen. Beide Auswirkungen erhöhen die Stillstandszeit für Wartungs- und Reinigungsschritte -, wodurch ein Verfahren unter Verwendung von Polyalkylsiloxanen entsprechende Kosten mit sich zieht.

Zum anderen haben diese Rückstände auch negative Auswirkungen auf die Eigenschaften des resultierenden Quarzglases, da die Gleichverteilung der Massenströme des Einsatzmaterialdampfes unkontrollierbar und damit nicht reproduzierbar beeinflusst wird. Damit werden die radiale und axiale Dichtevariation im Soot, die Variation im Chlorgehalt im nachfolgenden Dehydratisierungs- bzw. Chlorierungsschritt erhöht. Weiterhin führen derartige Rückstände zu einer Erhöhung der Außendurchmesser-Variation in einem Multibrennerverfahren. Dies wiederum hat Auswirkung auf den Ausschuss verbunden mit entsprechenden Materialverlusten. Die Folge ist eine schlechtere Prozesseffizienz verbunden mit erhöhten Herstellungskosten. Zusätzlich kommt hinzu, dass das Ausgangsmaterial an sich meist schon gewissen Chargenschwankungen unterliegt, die zwar im ppm-Bereich liegen, aber dennoch zu der oben beschriebenen mangelnden Kontrollierbarkeit und Reproduzierbarkeit des Prozesses beitragen. Auch haben Rohmaterialen unterschiedlicher Hersteller unterschiedliche Verunreinigungen/Verunreinigungsgrade, so dass keine Kontrolle über die Qualität des resultierenden Quarzglases gewährleistet ist.

Zur Lösung dieser Probleme schlägt die US 5,558,687 vor, die Polyalkylsiloxan-Komponente zunächst zu versprühen und dabei teilweise flüssig auf ein Packungsmaterial aufzubringen. Die flüssigen Polyalkylsiloxantropfen werden mit einem Trägergasstrom durch das Packungsmaterial abwärts getragen, wobei sie innerhalb dieses Packungsmaterials verdampfen. Die Richtung des Dampfstroms, welcher die Packung verlässt, wird im Anschluss um 180° geändert (von unten nach oben fließend), so dass sich die höher molekularen Verunreinigungen (Polymere und Gele) am Boden der Vorrichtung absetzen und der so gereinigte Dampfstrom zu weiteren Verwendung aufwärts fließt. Auch wird hier beschrieben, dass ein zusätzlicher optionaler Filter aus Glaswolle in diesen Dampfstrom eingebaut werden kann. Allerdings kommt es auf der Eingangsseite des Packungsmaterials durch das Vorliegen der flüssigen Phasen zu starken Verklebungen durch Gelbildung. Des Weiteren nachteilig sind die relativ langen Responsezeiten eines solchen Verdampfers, da die Zeit bis zur Verdampfung des flüssigen Materials in der Packung lang ist. Ebenso sollte festgehalten werden, dass in Bezug auf den Einbau eines Filters in die Dampfphase ausschließlich die Verwendung eines Glaswollefilters erwähnt wird. Dies ist aus verfahrenstechnischer Sicht zunächst dadurch bedingt, dass ein solcher Filter dafür bekannt ist, wenig Einfluss auf den Druckabfall des Systems über dem Filter zu nehmen. Glaswolle ist nicht porös und weist in der Regel eine innere Oberfläche, gemessen nach dem BET-Verfahren, von ca. 1 bis << 2 m²/g auf.

Ein anderer Ansatz zur Vermeidung der Polymer- und Gelbildung ist in der WO 98147946 A1 beschrieben. In diesem Dokument wird beschrieben, dass polare Verunreinigungen in dem Polyalkylsiloxan, welche grundsätzlich Siedepunkte in der Nähe der Siedepunkte des Ziel-Polyalkylsiloxans aufweisen, zu der Polymer- und Gelbildung innerhalb des Polyalkylsiloxans beitragen. Allerdings wird hier beschrieben, dass diese polaren Verunreinigungen überraschenderweise nicht verdampfen und dass ihre Entfernung durch Festphasenextraktion mittels einer porösen Silicagel-Packung aus dem flüssigen Polyalkylsiloxan-Ausgangsmaterial dazu führt, dass der Einsatz des so gereinigten Ausgangsmaterials (d. h. Polyalkylsiloxan ohne nicht-flüchtige Verunreinigungen) in der Quarzglasherstellung vorteilhaft ist, da dieses nicht mehr zur Polymerisation und/oder Gelbildung neigt. Allerdings ist nachteilig, dass diese Strategie damit einen zusätzlichen Verfahrensschritt erfordert, welcher mit entsprechendem Zeit- und Kostenaufwand verbunden ist. Insbesondere beim Einsatz von großtechnischen Mengen an Siloxanen (> 50 to) ist diese Flüssig/Feststoff-Extraktion als zusätzlicher Reinigungsschritt aufwändig und teuer. Weiterhin nimmt die Reinigungswirkung während des Extraktionsvorganges mit zunehmender Beladung des Silica-Materials ab (s. WO 98/47946 A1; Fig. 4A - D). Als Folge kann sich mit zunehmender Extraktionszeit die Qualität des Rohmaterials verändern. Weiterhin sind mit so einem Verfahren relativ lange Verweilzeiten bzw. Kontaktzeiten mit dem Silica-Material verbunden. Je nach Vorbehandlung der Silica-Materialien können diese als schwache L-Base wirken. Bei längerer Kontaktzeit, wie bei einer Flüssig-Extraktion können in Abhängigkeit des Silica-Materials saure Bestandteile eingetragen werden oder im Spurenbereiche Umlagerungsreaktionen stattfinden, die sich in der nachfolgenden Verdampfung wiederum nachteilig auf das Polymerisationsverhalten auswirken (d. h. es können Ringöffnungsreaktionen initiiert werden und auch Umlagerungsreaktionen zu höheren zyklischen Homologen stattfinden). Ein weiteres Problem ist, dass aufgrund des intensiven Flüssig/Feststoffkontaktes elementare Spurenverunreinigungen eingetragen werden können, die sich wiederum nachteilig auf Polymerisationsverhalten der Einsatzverbindung auswirken kann. Ausgehend von diesem Stand der Technik liegt der vorliegenden Erfindung die Aufgabe zu Grunde, ein Verfahren zur Herstellung von synthetischem Quarzglas unter Verwendung eines Polyalkylsiloxan-Ausgangsmaterials bereit zu stellen, welches mindestens einen, bevorzugt alle Nachteile des Standes der Technik überkommt. Insbesondere liegt der vorliegenden Erfindung die Aufgabe zu Grunde, ein Verfahren zur Herstellung von synthetischem Quarzglas unter Verwendung eines Polyalkylsiloxan-Ausgangsmaterials bereit zu stellen, bei dem platzsparende Apparaturen verwendet werden können. Es sollte vorzugsweise die Notwendigkeit eines zusätzlichen Reinigungsschrittes entfallen. Dabei soll dennoch ein Einsatzmaterialdampf für die Herstellung von Quarzglas bereitgestellt werden, welcher eine ebenso geringe Neigung zur Polymerisation und/oder Gelbildung wie die Einsatzmaterialdämpfe des Standes der Technik, vorzugsweise eine geringe Neigung zur Polymerisation und/oder Gelbildung als die Einsatzmaterialdämpfe des Standes der Technik aufweist. Dadurch soll insgesamt die Kontrollierbarkeit und Reproduzierbarkeit des Verfahrens zur Herstellung von Quarzglas verbessert werden.

Gelöst wurden diese Aufgaben durch das im Folgenden beschriebene erfindungsgemäße Verfahren zur Herstellung von synthetischem Quarzglas, die erfindungsgemäße Vorrichtung zur Herstellung von synthetischem Quarzglas, die erfindungsgemäße Verwendung einer Schüttung aus porösen Silica-Partikeln sowie das erfindungsgemäße synthetische Quarzglas.

Erfindungsgemäß wird ein Verfahren zur Herstellung von synthetischem Quarzglas bereitgestellt, welches die folgenden Schritte umfasst:
(a) Verdampfen eines Einsatzmaterials, das mindestens eine polymerisierbare Polyalkylsiloxanverbindung enthält, unter Bildung eines Einsatzmaterialdampfes;
(b) Durchleiten des aus Verfahrensschritt (a) resultierenden Einsatzmaterialdampfes durch mindestens eine Reinigungsvorrichtung, um den Einsatzmaterialdampf zu reinigen;
(c) Zuführen des aus Verfahrensschritt (b) resultierenden gereinigten Einsatzmaterialdampfes zu einer Reaktionszone, in dem der Einsatzmaterialdampf durch Oxidation und/oder durch Hydrolyse zu SiO₂-Partikeln umgesetzt wird; und
(d) Abscheiden der aus Verfahrensschritt (c) resultierenden SiO₂-Partikel auf einer Ablagerungsfläche,
(e) gegebenenfalls Trocknen und Verglasen der aus Verfahrensschritt (d) resultierenden SiO₂-Partikel unter Bildung von synthetischem Quarzglas,

Das erfindungsgemäße Verfahren ist dann dadurch gekennzeichnet, dass die mindestens eine Reinigungsvorrichtung des Verfahrensschritts (b) eine Schüttung aus porösen Silica-Partikeln umfasst, welche eine spezifische Oberfläche von mindestens 2 m²/g aufweisen, wobei die spezifische Oberfläche bestimmt wird durch eine Messung gemäß Brunauer, Emmett und Teller (BET-Oberfläche).

Es wurde überraschenderweise festgestellt, dass der Einsatz einer Schüttung aus porösen Silica-Partikeln, welche eine spezifische Oberfläche von mindestens 2 m²/g aufweist, in den bereits verdampften Einsatzmaterialdampf dazu führt, dass die Neigung des Einsatzmaterialdampfes, zu polymerisieren und/oder Gele zu bilden, reduziert wird. Dies ist insbesondere überraschend, als dass im Stand der Technik beschrieben wird, dass zum einen die die Polymerisation verursachenden Verunreinigungen nicht flüchtig sind und daher aus der flüssigen Phase abgetrennt werden müssen. Zum anderen ist dies überraschend, da die oligomeren und/oder polymeren Bestandteile, welche bei der Verdampfung entstanden sind, durch die Verwendung einer porösen Schüttung insoweit abgetrennt werden können, ohne dass die Schüttung einer Verstopfung durch Polymerablagerungen und/oder Gelbildung unterliegt. Dies führt überraschenderweise dazu, dass insgesamt der Druckabfall über der Schüttung gering, insbesondere verfahrenstechnisch und wirtschaftlich sinnvoll bleibt, und dass auf einen aufwendigen, vorgeschalteten Flüssigkeits-/Feststoff-Extraktionsprozess in der flüssigen Phase verzichtet werden kann.

Ohne an eine Theorie gebunden sein zu wollen, wird vermutet, dass verschiedene Arten von Spurenverunreinigungen im Einsatzmaterial enthalten sind, die Rückstände im Verdampfer und in der Dampfleitung verursachen können.

### A) Hochsiedende Spurenverunreinigungen

Diese sind dadurch gekennzeichnet, dass sie sich viel schwerer verdampfen lassen und aufgrund ihres sehr geringen Dampfdruckes bzw. geringen Taupunkts im Verdampfer und in den Verdampferleitungen zurückbleiben können und sich bei langer Verweilzeit im Dampfleitungssystem zu gelartigen Rückständen verlinken.

### B) Polare Spurenverunreinigungen

Solche reaktiven Spurenverunreinigungen können zum Beispiel die oben genannten Silanole darstellen. Diese Spurenverunreinigungen können aufgrund ihrer polaren OH-Gruppen die Ringöffnungsreaktionen der cyclischen Siloxane initiieren. Sie können über eine Kondensationsreaktion mit den cyclischen Hauptbestandteilen zu höher siedenden Verunreinigungen reagieren, die sich dann ebenfalls als gelartige Verunreinigungen in der Dampfleitung anreichern.

### C) Katalytisch wirkende Spurenverunreinigungen

Reaktive katalytisch wirkende Spurenverunreinigungen sind z. B. Lewis-Säuren und Lewis Basen. Diese Verbindungen können in Gegenwart von Spuren an Restfeuchte Ringöffnungsreaktionen initiieren. Dies können z. B. auch metallische Spurenverunreinigungen (Metalloxide und/oder Metallhalogenide) sein, die ebenfalls an den Ringöffnungsreaktionen der cyclischen Siloxane teilnehmen. Über weitere Reaktion mit den cyclischen Hauptbestandteilen können höher siedenden Verunreinigungen entstehen, die sich dann ebenfalls als gelartige Verunreinigungen in der Dampfleitung anreichern.

Die reaktiven Spurenverunreinigungen unter B) und C) (z. B. Silanole, Lewis-Säuren und Lewis-Basen) lassen sich überraschenderweise und erfindungsgemäß aus dem Rohmaterial besonders effektiv und wirkungsvoll entfernen, wenn das Einsatzmaterial in Form eines Einsatzmaterialdampfes durch eine Reinigungsvorrichtung geleitet wird, welche eine Schüttung aus porösen Silica-Partikeln umfasst, welche eine spezifische Oberfläche von mindestens 2 m²/g aufweist.

Da in den porösen Silica-Partikeln der Reinigungsvorrichtung nach Durchführung des Verfahrens keine signifikanten Rückstände an Silanolen gefunden wurden, wird vermutet, dass sich die reaktiven Silanole am Silica bei den verwendeten Einsatztemperaturen überwiegend in cyclische, flüchtige Siloxane umgewandelt haben. Dadurch lässt sich erfindungsgemäß die Standzeit einer solchen Packung deutlich erhöhen.

Zusätzlich hat sich herausgestellt, dass mittels der Verwendung der erfindungsgemäßen Schüttung die Chargenunterschiede in den Ausgangsverbindungen ausgleichen lassen, so dass das hergestellte synthetische Quarzglas insgesamt eine gleichbleibend gute Qualität aufweist. Zusammen mit der Tatsache, dass durch die Verminderung und/oder Vermeidung von Polymer- und/oder Gelablagerung im Verdampfer, in den Dampfleitungen, Regelventilen, Drosseln, sonstigen Gasdosiereinrichtungen und Leitungen insgesamt eine Gleichverteilung der Massenströme erreicht werden kann, kann somit durch den Gegenstand der Erfindung das Verfahren kontrolliert und reproduzierbar durchgeführt werden. Dies führt, wie oben dargelegt, zu einer signifikanten Kostenersparnis.

Erfindungsgemäß wird unter dem Begriff "umfassen" bevorzugt "bestehen aus" verstanden.

### Verfahrensschritt (a) - Verdampfen des Einsatzmaterials

Im Verfahrensschritt (a) wird ein Einsatzmaterial, das mindestens eine polymerisierbare Polyalkylsiloxanverbindung enthält, unter Bildung eines Einsatzmaterialdampfes verdampft.

Grundsätzlich kann erfindungsgemäß jede polymerisierbare Polyalkylsiloxanverbindung, welche sich zur Herstellung von synthetischem Quarzglas eignet, verwendet werden. Im Rahmen der Erfindung umfasst der Begriff Polyalkylsiloxan sowohl lineare (umfassend auch verzweigte Strukturen) als auch zyklische Molekularstrukturen.

Besonders geeignete cyclische Vertreter sind Polyalkylsiloxane mit der allgemeinen Summenformel

SiₚOₚ(R)₂ₚ,

wobei p eine ganze Zahl größer gleich 2 ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt.

Die Polyalkylsiloxanverbindung ist dabei vorzugsweise ausgewählt aus der Gruppe, bestehend aus Hexamethylcyclotrisiloxan (D3), Octamethylcyclotetrasiloxan (D4), Dekamethylcyclopentasiloxan (D5), Dodecamethylcyclohexasiloxan (D6), Tetradekamethylcycloheptasiloxan (D7), Hexadecamethylcyclooctasiloxan (D8) sowie deren linearen Homologen und beliebigen Mischungen der vorgenannten Verbindungen. Die Notation D3, D4, D6, D7 und D8 entstammt dabei einer von General Electric Inc. eingeführten Notation, bei der "D" die Gruppe [(CH₃)₂Si]-O- repräsentiert.

Im Rahmen der vorliegenden Erfindung können auch Mischungen der vorgenannten Polyalkylsiloxanverbindungen verwendet werden.

Wegen der großtechnischen Verfügbarkeit in hoher Reinheit wird derzeit Octamethylcyclotetrasiloxan (OMCTS) bevorzugt eingesetzt. Im Rahmen der vorliegenden Erfindung ist es daher insbesondere bevorzugt, wenn es sich bei der Polyalkylsiloxanverbindung um Octamethylcyclotetrasiloxan (D4) handelt.

Grundsätzlich ist es möglich, dass das Einsatzmaterial vor dem Einbringen in Verfahrensschritt (a) einer Aufreinigung unterzogen wird. Dem Fachmann sind solche Aufreinigungsverfahren bekannt. In einer bevorzugten Ausführungsform wird das Einsatzmaterial jedoch zuvor keinem vorgeschaltetem Aufreinigungsverfahren unterzogen. Dies bedeutet, dass das Einsatzmaterial bevorzugt keinem Verfahren unterworfen wird, bei dem aus dem kommerziell erhältlichen Produkt eine Verunreinigung entfernt wird. Bevorzugt wird dabei keine der Verunreinigungen A) bis C), wie oben beschrieben, entfernt. Ganz besonders bevorzugt ist das erfindungsgemäße Verfahren dadurch gekennzeichnet, dass das flüssige Einsatzmaterial der mindestens einen polymerisierbaren Polyalkylsiloxanverbindung vor der Verdampfung keiner Festphasenextraktion ausgesetzt wird. Damit wird das Einsatzmaterial bevorzugt keiner Flüssig/Festphasenextraktion unterzogen. Es hat sich überraschenderweise herausgestellt, dass durch das erfindungsgemäße Verfahren dennoch Quarzglas mit einer hohen Kontrollierbarkeit und Reproduzierbarkeit hergestellt werden kann. Insbesondere dadurch, dass ein zusätzlicher Reinigungsschritt entfallen kann, können durch das erfindungsgemäße Verfahren Kosten durch Zeitersparnis und Reduzierung der Stillstandszeiten erzielt werden.

Zudem kann, wenn das Einsatzmaterial insbesondere keiner Flüssig/Festphasenextraktion unterzogen wird, vermieden werden, dass, wie oben näher erläutert, zusätzliche Verunreinigung aus der Festphase in das Einsatzmaterial gelangen.

Die Verdampfung des Einsatzmaterials kann mit oder ohne Anwesenheit einer Trägergas-Komponente erfolgen. Bevorzugt erfolgt die Verdampfung des Einsatzmaterials in Anwesenheit eines Trägergases, da dadurch die Verdampfung bei Temperaturen unterhalb des Siedepunktes der Polyalkylsiloxanverbindung erfolgen kann. Dies bedeutet, dass der Einsatzmaterialdampf bevorzugt zusätzlich ein Trägergas umfasst. Eine solche Vorgehensweise ist bevorzugt, wenn die Verdampfung des Einsatzmaterials unterhalb seines Siedepunktes stattfinden soll. Das Inertgas ist bevorzugt chemisch inert und ist bevorzugt Stickstoff oder Argon. Dabei liegt das Molverhältnis der polymerisierbaren Polyalkylsiloxanverbindung zum Trägergas bevorzugt im Bereich von 0,01 bis 2; besonders bevorzugt im Bereich von 0,02 bis 1,5 und ganz besonders bevorzugt im Bereich von 0,05 bis 1,25. Insbesondere ist es bevorzugt, dass als Trägergas Stickstoff mit Feuchtegehalt < 40 Volumen-ppm eingesetzt wird und als polymerisierbare Polyalkylsiloxanverbindung OMCTS. Dabei ist es des Weiteren bevorzugt, dass das molekulare Verhältnis von OMCTS zu Stickstoff im Bereich von 0,015 bis 1,5 liegt.

Der Verfahrensschritt des Verdampfens ist dem Fachmann an sich bekannt. Dabei wird die Polyalkylsiloxanverbindung je nach gewähltem molekularem Verhältnis der Polyalkysiloxanverbindung und Trägergas vorzugsweise bei Temperaturen zwischen 120 und 200 °C in eine dampfförmige Phase überführt. Dabei sollte die Verdampfungstemperatur in der Verdampfungskammer immer mindestens einige Grad oberhalb des Taupunktes der Polyalkylsiloxanverbindung sein. Der Taupunkt ist wiederum abhängig vom gewählten molekularen Verhältnis aus Polyalkylsiloxanverbindung und Trägergas. In einem bevorzugten Ausführungsverfahren wird dazu die Polyalkylsiloxanverbindung vor der Verdampfung auf Temperaturen zwischen 40 und 120 °C vorerwärmt und anschließend in eine Verdampfungskammer versprüht, die eine höhere Temperatur als die Vorerwärmung der Einsatzstoffe aufweist. Das inerte Trägergas kann in einer bevorzugten Ausführungsform zusätzlich auf Temperaturen von bis zu 250 °C vorerwärmt werden, bevor es der Verdampfungskammer zugeführt wird. Von Vorteil ist, dass die Temperatur in der Verdampfungskammer im Mittel immer oberhalb der Taupunktstemperatur der Mischung aus Polyalkylsiloxan und Trägergas liegt. Geeignete Verdampfungsverfahren werden z. B. in den Internationalen Patentanmeldungen WO 2013/087751 A und WO 2014/187513 A sowie der deutschen Patentanmeldung DE 10 2013 209 673 beschrieben.

Im Rahmen der Erfindung beschreibt der Begriff "Taupunkt" die Temperatur, bei der sich ein Gleichgewichtszustand von kondensierender und verdunstender Flüssigkeit einstellt.

Bei der Verwendung von Temperaturen unterhalb des Siedepunkts des Einsatzmaterials erfolgt die Verdampfung bevorzugt zusammen mit einem inerten Trägergas.

Im Rahmen der vorliegenden Erfindung wird unter einer "Verdampfung" der Vorgang verstanden, bei der das Einsatzmaterial im Wesentlichen von der flüssigen Phase in eine gasförmige Phase überführt wird. Dies geschieht bevorzugt, indem, wie oben beschrieben, Temperaturen verwendet werden, welche oberhalb des Taupunktes der polymerisierbaren Polyalkylsiloxanverbindung als Hauptkomponente des Einsatzmaterials liegen. Dem Fachmann ist dabei bewusst, dass verfahrenstechnisch nicht ausgeschlossen werden kann, dass kleine Flüssigkeitstropfen des Einsatzmaterials mitgerissen werden können. Somit wird im Verfahrensschritt (a) bevorzugt ein Einsatzmaterialdampf erzeugt, welcher vorzugsweise nicht weniger als 97 Mol.-%, bevorzugt nicht weniger als 98 Mol.-%, besonders bevorzugt nicht weniger als 99 Mol.-%, ganz besonders bevorzugt nicht weniger als 99,9 Mol.-% gasförmige Bestandteile enthält.

Insbesondere ist es bevorzugt, dass die Temperatur des Einsatzmaterialdampfes, insbesondere für und/oder während des nachfolgenden Verfahrensschritts (b), im Wesentlichen oberhalb von 100°C gehalten wird. Dies führt dazu, dass die reaktiven Spurenbestandteile im Einsatzmaterial ausreichend thermisch "aktiviert" werden. Dies bedeutet insbesondere, dass die Spurenbestandteile durch die thermische Aktivierung eine hohe Beweglichkeit aufweisen können, so dass sie durch die gängigen Transportvorgänge in die innere Porenstruktur der Schüttung der Silica-Partikel eingebracht werden können. Dies hat insbesondere den Vorteil, dass die gesamte Oberfläche (d. h. auch die innersten Poren der Silica-Partikel) von diesen Spurenbestandteilen in der Dampfphase schnell erreicht werden können und es somit zu einer effektiven Aufreinigung kommt. Die Spurenverunreinigungen können mit den OH-Gruppen der Oberfläche und der Porenwände des Silica-Materials eine Bindung eingehen/absorbieren (Chemisorption) oder an diese adsorbieren (Physisorption). Dabei hat es sich herausgestellt, dass die Schüttung dadurch, dass sie im Wesentlichen mit dem Einsatzmaterial in gasförmiger Phase in Kontakt kommt, weder verklebt noch verstopft und es insbesondere nicht zur Bildung eines Filterkuchens und damit zu einem erhöhten Druckverlust über die Schüttung kommt. Selbst nach der Verdampfung von mehr als 15 t von kommerziell erhältlichem OMCTS konnte keine Verklebung beobachtet werden.

Der durch den Verfahrensschritt (a) erzeugte Einsatzmaterialdampf wird im Anschluss dem Verfahrensschritt (b) zugeleitet.

### Verfahrensschritt (b) - Reinigung des Einsatzmaterialdampfes

In Verfahrensschritt (b) wird der aus Verfahrensschritt (a) resultierende Einsatzmaterialdampf durch mindestens eine Reinigungsvorrichtung durchgeleitet, um den Einsatzmaterialdampf zu reinigen. Dabei umfasst die Reinigungsvorrichtung des Verfahrensschritts (b) eine Schüttung aus porösen Silica-Partikeln, welche eine spezifische Oberfläche von mindestens 2 m²/g aufweisen, wobei die spezifische Oberfläche durch eine Messung gemäß Brunauer, Emmett und Teller gemessen wird (BET-Oberfläche).

Erfindungsgemäß wird dabei also der Einsatzmaterialdampf mit einer Packung poröser Silica-Partikel in Kontakt gebracht. Zwar ist dem Fachmann bekannt, dass durch Porenkondensation teilweise der Einsatzmaterialdampf wieder in die flüssige Phase übergehen kann, jedoch wird erfindungsgemäß zunächst der Einsatzmaterialdampf, wie er oben näher beschrieben wurde, mit der Packung kontaktiert. Dies führt zu der oben beschriebenen Effizienz der Aufreinigung des Einsatzmaterials und der überraschenden guten Praktikabilität des erfindungsgemäßen Verfahrens. Während es zu einer guten Aufreinigung des Einsatzmaterials kommt, wodurch eine Gel- und Polymerbildung innerhalb der nachfolgenden Vorrichtungen vermieden werden kann und was zu einer guten Kontrollierbarkeit und Reproduzierbarkeit der Quarzglasherstellung führt, ist die Packung aus Silica-Partikeln besonders langlebig und beeinträchtigt insbesondere durch einen nur geringen Druckabfall über die Packung den gesamten Verfahrensablauf der Quarzglaseinstellung nur minimal. Der somit selten erforderliche Wechsel der Packung führt zu geringen Stillstandszeiten. Zudem ist die Reinigungsvorrichtung apparativ einfach und kann sogar in bestehende Vorrichtungen zur Quarzglasherstellung nachträglich integriert werden.

Erfindungsgemäß bezieht sich die spezifische Oberfläche, soweit nicht anders angegeben, auf die BET-Oberfläche. Das Verfahren zur Bestimmung dieser Oberfläche ist dem Fachmann bekannt. Sie kann insbesondere gemäße der DIN ISO 9277:2003-05 bestimmt werden.

Besonders bevorzugt ist es, wenn die BET-Oberfläche der porösen Silica-Partikel im Bereich von 2 bis 450 m²/g, besonders bevorzugt 2 bis 300 m²/g, ganz besonders bevorzugt im Bereich von 2 bis 250 m²/g liegt. Es hat sich herausgestellt, dass insbesondere in diesem Bereich die Aufreinigung des Einsatzmaterialdampfes besonders effektiv ist.

Ganz besonders bevorzugt ist es, wenn die BET-Oberfläche der porösen Silica-Partikel im Bereich von 2 bis 200 m²/g, 4 bis 150 m²/g oder 6 bis 100 m²/g liegt. Insbesondere in diesem Bereich ist die Aufreinigung des Einsatzmaterialdampfes überraschenderweise am besten und die Standzeit am längsten.

Grundsätzlich können für die Schüttung aus Silica-Partikeln jegliche Silica-Partikel verwendet werden, welche die geforderte spezifische Oberfläche aufweisen. Es ist jedoch bevorzugt, dass die Silica-Partikel synthetisches Silicamaterial umfasst.

Bevorzugt weist das Silicamaterial Gehalte der Elemente der Gruppe, bestehend aus Li, Na, K, Ca und Mg, auf, welche in Summe kleiner 1 ppm, bevorzugt kleiner 500 ppb, besonders bevorzugt kleiner 250 ppb, ganz besonders bevorzugt kleiner 100 ppb und insbesondere bevorzugt kleiner 50 ppb sind.

Bevorzugt weist das Silicamaterial Gehalte der Elemente der Gruppe, bestehend aus Fe, Cu, Cr, Mn und Ni, auf, welche in Summe kleiner 1 ppm, bevorzugt kleiner 500 ppb, besonders bevorzugt kleiner 250 ppb, ganz besonders bevorzugt kleiner 100 ppb und insbesondere bevorzugt kleiner 50 ppb sind.

Bevorzugt weist das Silicamaterial Gehalte der Elemente der Gruppe, bestehend aus Ti, Zr, und Zn, auf, welche in Summe kleiner 1 ppm, bevorzugt kleiner 500 ppb, besonders bevorzugt kleiner 250 ppb, ganz besonders bevorzugt kleiner 100 ppb und insbesondere bevorzugt kleiner 50 ppb sind.

Bevorzugt weist das Silicamaterial einen Gehalt an Al auf, welcher kleiner 50 ppm, bevorzugt kleiner 1 ppm, besonders bevorzugt kleiner 500 ppb, ganz besonders bevorzugt kleiner 250 ppb und insbesondere bevorzugt kleiner 100 ppb ist.

Bevorzugt weist das Silicamaterial einen Restchlorgehalt auf, welcher kleiner 500 ppm, bevorzugt kleiner 100 ppm, besonders bevorzugt kleiner 50 ppm, ganz besonders bevorzugt kleiner 5 ppm und insbesondere bevorzugt kleiner 2 ppm ist.

Jeder dieser bevorzugten Gehalte, vorzugsweise eine Kombination aus mindestens zwei dieser Gehalte, besonders bevorzugt alle Gehalte führen dazu, dass die Aufreinigung des Einsatzmaterialdampfes besonders effektiv ist. Solche Silica-Partikel sind beispielsweise durch einen Schlickergranulationsprozess (Eirich-Granulation) erhältlich.

Bevorzugt ist das erfindungsgemäße Verfahren dadurch gekennzeichnet, dass die Schüttung der porösen Silica-Partikel eine Korngrößenverteilung aufweist, in der mindestens 75 Gew.-% der Partikel einen Durchmesser von 50 bis 4000 µm aufweisen. Dabei wurde die Fraktion zwischen 2000 und 4000 µm mittels klassischer Siebtechnik ermittelt und die Fraktion zwischen 1 und 2000 µm wurden mittels Laserlichtstreuverfahren bestimmt (unter Verwendung eines Mastersizer 2000). Besonders bevorzugt weist die Schüttung der porösen Silica-Partikel eine Korngrößenverteilung auf, in der mindestens 75 Gew.-% der Partikel einen Durchmesser von 100 bis 3000 µm, ganz besonders bevorzugt von 125 bis 2500 µm und insbesondere bevorzugt von 180 bis 2000 µm aufweisen. Eine weitere erfindungsgemäß bevorzugte Korngrößenverteilung liegt vor, bei welcher mindestens 75 Gew.-% der Partikel einen Durchmesser von 500 bis 2000 µm aufweisen.

Die Gewichtsprozente beziehen sich dabei auf das Gesamtgewicht der Schüttung aus porösen Silica-Partikeln. Durch diese Ausgestaltung kann insbesondere ein geringer Druckabfall über der Schüttung bei gleichzeitig effizienter Reinigungswirkung erzielt werden. Entgegen der Einschätzung der WO 98/47946, dass bei der Flüssig/Festphasenextraktion geringere Partikelgrößen des Silicas vorteilhaft sind, hat sich überraschenderweise herausgestellt, dass auch in den erfindungsgemäß bevorzugten Partikelgrößenbereich eine effektive Aufreinigung des Einsatzmaterialdampfes stattfindet. Gleichzeitig ist jedoch eine höhere Durchflussgeschwindigkeit realisierbar und ein zusätzlicher Verfahrensschritt entfällt.

Bevorzugt ist das erfindungsgemäße Verfahren dadurch gekennzeichnet, dass die Schüttung der porösen Silica-Partikel in sämtlichen beschriebenen Ausgestaltungen einen Anteil an Korngrößen < 50 µm von höchstens 20 Gew.-%, besonders bevorzugt höchstens 15 Gew.-% aufweist. Dabei beziehen sich die Gewichtsprozente auf das Gesamtgewicht der Schüttung aus porösen Silica-Partikeln. Durch diese Ausgestaltung kann insbesondere ein geringer Druckabfall über der Schüttung bei gleichzeitig effizienter Reinigungswirkung erzielt werden.

Ebenso bevorzugt ist das erfindungsgemäße Verfahren dadurch gekennzeichnet, dass die Rütteldichte der Schüttung der porösen Silica-Partikel 0,5 bis 3 g/cm³, besonders bevorzugt 0,75 bis 2 g/cm³ und insbesondere bevorzugt 0,9 bis 1,5 g/cm³ beträgt. Die Bestimmung der Rütteldichte ist dem Fachmann bekannt und kann insbesondere gemäß DIN 53 194 erfolgen. Diese Rütteldichte stellt insbesondere eine gute Kombination zwischen einem geringen Druckabfall über der Schüttung und damit einem hohen Durchsatz und einer effizienten und wirksamen Aufreinigung dar.

Bevorzugt ist das erfindungsgemäße Verfahren dadurch charakterisiert, dass der Druckabfall des Einsatzmaterialdampfes durch die Reinigung in Verfahrensschritt (b) 2 bis 750 mbar, bevorzugt 3 bis 400 mbar, weiter bevorzugt 5 bis 100 mbar, beträgt.

Erfindungsgemäß beträgt die Anströmgeschwindigkeit des Einsatzmaterialdampfes aus Verfahrensschritt (a) in den Verfahrensschritt (b) bevorzugt 0,01 bis 2 m/s, besonders bevorzugt 0,02 bis 1 m/s. Bei diesen Geschwindigkeiten kann trotz des hohen Durchsatzes noch eine gute Reinigungsleistung erzielt werden. Dabei ist es insbesondere bevorzugt, dass die mittlere Verweilzeit des Einsatzmaterialdampfes in der Schüttung aus Silica-Partikeln weniger als 2 min, besonders bevorzugt weniger als 1 min, insbesondere bevorzugt weniger als 45 s, weiter bevorzugt weniger als 30 s, weiter bevorzugt weniger als 15 s und ganz besonders bevorzugt weniger als 5 s beträgt. Diese kurze mittlere Verweilzeit führt insbesondere dazu, dass keine Sekundärreaktionen zwischen dem Silica-Material und dem Einsatzmaterialdampf initiiert werden (z. b. Ringöffnungsreaktionen). Eine solche kurze mittlere Verweilzeit ist insbesondere deswegen realisierbar, da das Einsatzmaterial in Dampfform vorliegt.

Dabei sollte der Einsatzmaterialdampf im Verfahrensschritt (b) eine Temperatur von mehr als 100 °C, bevorzugt mehr als 120 °C und besonders bevorzugt von mehr als 130 °C aufweisen. Dadurch wird gewährleistet, dass das Einsatzmaterial im Wesentlich in der Dampfform verbleibt. Gegebenenfalls können hierzu apparativ zusätzliche Heizvorrichtungen vorgesehen sein, um diese Temperatur des Einsatzmaterialdampfes zu gewährleisten.

Bevorzugt beträgt die Schütthöhe der Schüttung der porösen Silica-Partikel parallel zur Flussrichtung des Einsatzmaterialdampfes 10 mm bis 300mm. Insbesondere in Kombination mit der angegebenen Korngrößenverteilung kann dadurch eine ausreichende Reinigungswirkung bei hohem Durchsatz gewährleistet werden.

Erfindungsgemäß werden insbesondere die reaktiven Spurenverunreinigungen unter B) und C) (z. B. Silanole, Lewis-Säuren und Lewis-Basen) im Reinigungsschritt des Verfahrensschritts (b) reduziert. Unter einer Reduktion dieser Spurenverunreinigungen wird insbesondere die Absenkung auf einen Gehalt an Spurenverunreinigungen verstanden, welcher geringer ist als der entsprechende Gehalt des kommerziellen Einsatzmaterials.

Insbesondere kann mit dem erfindungsgemäßen Reinigungsschritt (b) ein Einsatzmaterialdampf zur Verfügung gestellt werden, welcher eine reproduzierbar konstante Zusammensetzung aufweist. Dadurch haben insbesondere Chargenschwankungen im flüssigen Einsatzmaterial keinen Einfluss auf die Qualität des resultierenden synthetischen Quarzglases.

Ohne an eine Theorie gebunden sein zu wollen, scheint es auch vorteilhaft zu sein, dass die Teilchendichte des Einsatzmaterials im Dampf geringer ist als die bei einer Flüssigextraktion (wie beispielsweise im Stand der Technik). Dadurch wird die Wahrscheinlichkeit einer möglichen Wechselwirkung zwischen dem Silica-Material und dem Einsatzmaterial reduziert, so dass unerwünschte Nebenreaktionen seltener auftreten. Gleichzeitig ist die Wechselwirkung jedoch ausreichend, um eine effektive Aufreinigung des Einsatzmaterialdampfes zu erzielen.

### Verfahrensschritt (c) - Umsetzung des Einsatzmaterialdampfes

Im Verfahrensschritt (c) wird der aus Verfahrensschritt (b) resultierende gereinigte Einsatzmaterialdampf zu einer Reaktionszone geführt, in dem der Einsatzmaterialdampf durch Oxidation und/oder oder durch Hydrolyse zu SiO₂-Partikeln umgesetzt wird.

Dieser Verfahrensschritt entspricht insbesondere einem bekannten Sootverfahren oder einem bekannten Direktverglasungsverfahren. Die möglichen Ausgestaltungen sind dem Fachmann bekannt.

### Verfahrensschritt (d) - Abscheiden der SiO₂-Partikel

Im Verfahrensschritt (d) werden die aus Verfahrensschritt (c) resultierenden SiO₂-Partikel auf einer Ablagerungsfläche abgeschieden. Die Ausgestaltung dieses Verfahrensschritts liegt im Können und Wissen des Fachmanns.

### Verfahrensschritt (e) - gegebenenfalls Trocknen und Verglasen

Im Verfahrensschritt (e) werden die aus Verfahrensschritt (d) resultierenden SiO₂-Partikel unter Bildung von synthetischem Quarzglas gegebenenfalls getrocknet und verglast. Dieser Verfahrensschritt ist insbesondere dann notwendig, wenn die zuvor durchgeführten Verfahrensschritte gemäß einem Sootverfahren durchgeführt wurden. Die Ausgestaltung dieses Verfahrensschritts liegt im Können und Wissen des Fachmanns.

Insgesamt eignet sich das erfindungsgemäße Verfahren auch zur Herstellung von synthetischem Quarzglas durch "Direktverglasen". Bei diesem Verfahren kommt es auf Grund hinreichend hoher Temperaturen bei der Abscheidung der SiO₂-Partikel im Verfahrensschritt (d) auf einer Ablagerungsfläche zu einem direkten Verglasen der SiO₂-Partkel. Beim "Direktverglasen" wird daher auf den optionalen Verfahrensschritt (d) verzichtet. Darüber hinaus eignet sich das erfindungsgemäße Verfahren auch zur Herstellung von Quarzglas nach dem "Sootverfahren", bei welchem die Temperatur beim Abscheiden der SiO₂-Partikel im Verfahrensschritt (c) so niedrig ist, dass eine poröse SiO₂-Sootschciht erhalten wird, die im separaten Verfahrensschritt (d) zu synthetischem Quarzglas getrocknet und verglast wird.

Das erfindungsgemäße Verfahren eignet sich zur Herstellung von synthetischem Quarzglas, welches als ein Außen- oder Innenabscheideverfahren durchgeführt wird. Wenn das erfindungsgemäße Verfahren als Außenabscheideverfahren durchgeführt wird, so handelt es sich bevorzugt um ein OVD-Verfahren (outside Vapour Phase Deposition), VAD-Verfahren (Vapour Phase axial Deposition) oder PECVD-Verfahren (Plasma Enhanced Chemical Vapour Deposition). Wenn das erfindungsgemäße Verfahren als Innenabscheideverfahren durchgeführt wird, so handelt es sich bevorzugt um ein MCVD-Verfahren (Modified Chemical Vapour Deposition).

### Vorrichtung

In einem weiteren Aspekt der vorliegenden Erfindung wird eine Vorrichtung zur Herstellung eines synthetischen Quarzglases bereitgestellt, welche durch die folgenden Bestandteile gekennzeichnet ist:
mindestens eine Verdampferzone 1 zum Verdampfen mindestens eines Einsatzmaterials, das mindestens eine polymerisierbare Polyalkylsiloxanverbindung enthält, unter Bildung eines Einsatzmaterialdampfes;
mindestens eine Reinigungsvorrichtung **2,** in welche der aus der mindestens einen Verdampferzone **1** resultierende Einsatzmaterialdampf geführt wird und welche eine Schüttung aus porösen Silica-Partikeln umfasst, welche eine spezifische Oberfläche von mindestens 2 m²/g aufweisen, wobei die spezifische Oberfläche bestimmt wird durch eine Messung gemäß Brunauer, Emmett und Teller (BET-Oberfläche);
mindestens eine Reaktionszone **3,** in welche der aus der mindestens einen Reinigungsvorrichtung **2** resultierende gereinigte Einsatzmaterialdampf geführt wird und in welcher das Einsatzmaterial durch Pyrolyse oder durch Hydrolyse zu SiO₂-Partikeln umgesetzt wird; und
mindestens eine Abscheidezone **4** mit einer Ablagerungszone für die aus der Reaktionszone **3** resultierenden SiO₂-Partikel unter Bildung von synthetischem Quarzglas.

Bevorzugt dient die erfindungsgemäße Vorrichtung der Durchführung des erfindungsgemäßen Verfahrens. Damit sind sämtliche oben beschriebenen Bevorzugungen, welche räumlich körperliche Merkmale aufweisen, ebenfalls für die erfindungsgemäße Vorrichtung bevorzugt.

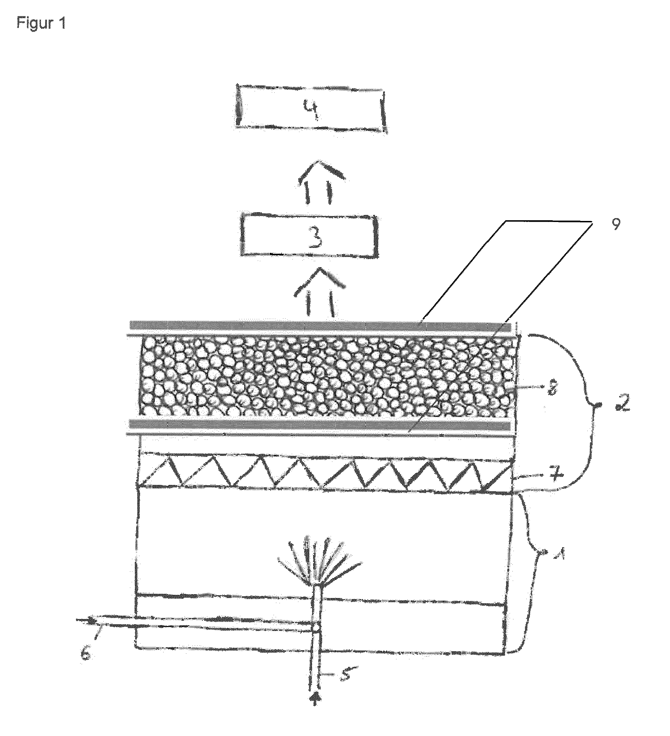

Im Folgenden wird die erfindungsgemäße Vorrichtung beispielhaft mit Bezug auf Figur 1 erläutert.

Die erfindungsgemäße Vorrichtung umfasst mindestens eine Verdampferzone **1.** In dieser Verdampferzone wird mindestens ein Einsatzmaterial, das mindestens eine polymerisierbare Polyalkylsiloxanverbindung enthält, unter Bildung eines Einsatzmaterialdampfes verdampft. Als Einsatzmaterial kann hierbei das oben beschriebene Einsatzmaterial in sämtlichen einzelnen oder kombinierten Ausgestaltungen verwendet werden.

Die Verdampferzone **1** umfasst somit eine Zuleitung **5** für das mindestens eine Einsatzmaterial. Optional kann die Verdampferzone auch eine Zuleitung **6** für ein Inertgas umfassen.

In der Verdampfungszone **1** kommt es zur Überführung des flüssigen Einsatzmaterials in die Gasphase unter Ausbildung eines Einsatzmaterialdampfes. Dem Fachmann sind Ausgestaltungen einer solchen Verdampfungszone bekannt.

In der mindestens einen Reinigungsvorrichtung **2,** in welche der aus der mindestens einen Verdampferzone **1** resultierende Einsatzmaterialdampf geführt wird, wird der Einsatzmaterialdampf aufgereinigt. Die Reinigungsvorrichtung **2** umfasst eine Schüttung aus porösen Silica-Partikeln **8,** welche eine spezifische Oberfläche von mindestens 2 m²/g aufweisen, wobei die spezifische Oberfläche bestimmt wird durch eine Messung gemäß Brunauer, Emmett und Teller (BET-Oberfläche). Bei den porösen Silica-Partikeln kann es sich bevorzugt um sämtliche einzelne oder kombinierte bereits oben beschriebene, bevorzugte Silica-Partikel-Ausgestaltungen handeln. Ebenso wird insbesondere Verfahrensschritt (b) mit sämtlichen Bevorzugungen in dieser Reinigungsvorrichtung **2** durchgeführt.

Die Reinigungsvorrichtung **2** kann des Weiteren bevorzugt eine Kontrolleinrichtung zum Messen und/oder Einstellen der Einsatzmaterialdampfgeschwindigkeit umfassen. Weiterhin kann der Druckverlust vor und nach der Reinigungsvorrichtung gemessen werden. Ebenso ist es möglich, über die durch die Kontrolleinrichtung erhaltenen Daten Rückschlüsse auf den Zustand der Reinigungsvorrichtung **2** zu ziehen und gegebenenfalls die Notwendigkeit eines Austausches oder einer Reinigung zu erkennen.

Die Reinigungsvorrichtung **2** kann des Weiteren bevorzugt mindestens eine Temperiereinheit umfassen. Diese soll gewährleisten, dass der Einsatzmaterialdampf in der mindestens einen Reinigungsvorrichtung **2** in der Gasphase, bei einer Temperatur oberhalb von 100, bevorzugt oberhalb 120 °C gehalten wird.

Des Weiteren kann die Reinigungsvorrichtung **2** bevorzugt mindestens ein Gewebe **7** umfassen. Das mindestens eine Gewebe **7** ist dabei so angeordnet, dass der Einsatzmaterialdampf, welcher aus der Verdampferzone **1** geführt wird, durch das mindestens eine Gewebe geleitet wird, bevor er mit der Schüttung aus porösen Silica-Partikeln in Kontakt tritt. Insbesondere dient dieses mindestens eine Gewebe **7** der Zurückhaltung von Flüssigkeitstropfen, welche der Einsatzmaterialdampf umfassen kann. Damit kann sichergestellt werden, dass der Einsatzmaterialdampf (zunächst) im Wesentlich in der gasförmigen Phasen mit der Schüttung aus porösen Silica-Partikeln in Kontakt tritt. Dies bedeutet bevorzugt, dass der Einsatzmaterialdampf, welcher mit der Schüttung aus porösen Silica-Partikeln in Kontakt tritt, nicht weniger als 97 Gewichts.-%, bevorzugt nicht weniger als 98 Gewichts-%, besonders bevorzugt nicht weniger als 99 Gewichts-%, ganz besonders bevorzugt nicht weniger als 99,9 Gewichts%, gasförmige Bestandteile enthält.

Bevorzugt wird der Einsatzmaterialdampf aus der Verdampferzone **1** auf im Wesentlichen geradem Wege in die Reinigungsvorrichtung **2** (d. h. gegebenenfalls durch mindestens ein Gewebe **7** und zur Schüttung der porösen Silica-Partikel **8**) geführt. Dies bedeutet, dass der Einsatzmaterialdampf vorzugsweise höchstens einer Richtungsänderung von 35°, bevorzugt von 25°, besonders bevorzugt von 10°, unterliegt. Geringe Richtungsänderungen sind hierbei insbesondere durch die Schwerkraft nicht vollständig zu vermeiden. Eine solche Führung des Dampfes führt insbesondere zu einem kompakten apparativen Aufbau.

Die mindestens eine Reaktionszone **3** der erfindungsgemäßen Vorrichtung ist dem Fachmann in seiner Ausgestaltung bekannt. Hierein wird der aus der mindestens einen Reinigungsvorrichtung **2** resultierende gereinigte Einsatzmaterialdampf geführt und in ihr wird das Einsatzmaterial durch Oxidation und/oder durch Hydrolyse zu SiO₂-Partikeln umgesetzt wird. Hier kann eine Ausgestaltung gemäß dem oben beschriebenen Direktverglasungs-Verfahren oder dem Sootverfahren vorgesehen sein.

Auch die mindestens eine Abscheidezone **4** mit einer Ablagerungszone für die aus der Reaktionszone **3** resultierenden SiO₂-Partikel ist dem Fachmann an sich bekannt.

### Verwendung

In einem weiteren Aspekt der vorliegenden Erfindung wird eine Verwendung einer Schüttung aus porösen Silica-Partikeln zur Reinigung eines Einsatzmaterialdampfes, der mindestens eine polymerisierbare Polyalkylsiloxanverbindung enthält, wobei die porösen Silica-Partikel eine spezifische Oberfläche von mindestens 2 m²/g aufweisen und wobei die spezifische Oberfläche bestimmt wird durch eine Messung gemäß Brunauer, Emmett und Teller (BET-Oberfläche), bereitgestellt. Bei der Schüttung aus porösen Silica-Partikeln kann es sich bevorzugt um sämtliche einzelne oder kombinierte oben beschriebene Ausgestaltungen handeln.

### Quarzglas

In einem weiteren Aspekt der vorliegenden Erfindung wird synthetisches Quarzglas bereitgestellt, welches durch das erfindungsgemäße Verfahren erhältlich ist. Das so erhaltene Quarzglas weist eine Homogenität und Reproduzierbarkeit auf, welche aus der effizienten Aufreinigung des Einsatzmaterialdampfes resultiert.

Des Weiteren weist das synthetische Quarzglas, welches aus dem Sootverfahren resultiert, nach der Sootabscheidung eine axial homogenere Dichteverteilung auf.

### Bezugszeichenerklärung

- 1: Verdampferzone
- 2: Reinigungsvorrichtung
- 3: Reaktionszone
- 4: Abscheidezone
- 5: Zuleitung für das mindestens eine Einsatzmaterial
- 6: Optionale Zuleitung für ein Inertgas
- 7: Optionales Gewebe
- 8: Schüttung aus porösen Silica-Partikeln
- 9: Gewebe, welches die Packung fixiert und hält

### Kurze Beschreibung der Figur

- Figur 1:: schematische Darstellung der erfindungsgemäßen Vorrichtung, wobei die Vorrichtung das optionale Gewebe **7** umfasst. Der Einsatzmaterialstrom (flüssig/gasförmig) erfolgt hier von unten nach oben.

### Beispiel:

Ein Verdampfer gemäß Figur 1 wurde mit verschiedenen Silica-Packungen gemäß Beispiel 1 bis 8 betrieben. Die Silica-Packungen hatten jeweils eine Schütthöhe nach dem Einrütteln von 50 mm. Das Rohmaterial wurde unter identischen Bedingungen auf 100 °C vorgewärmt und anschließend in eine auf 150 °C temperierte Verdampfungskammer zusammen mit auf 180 °C vorerwärmten Stickstoff als Trägergas gesprüht.

Anschließend wurde der mittlere Systemdruckanstieg auf der dampfführenden Seite im Rohr und Dosiersystem bis zum Brennerausgang in mbar/kg verdampfter Einsatzstoff ermittelt. Der Systemdruckanstiegt ist ein Maß für Ablagerungen von polymeren Rückständen in den dampfführenden Leitungen, Drosseln und Dosiereinrichtungen. Je kleiner der Systemdruckanstieg pro verdampften Einsatzstoff ist, desto geringer ist der Wartungsaufwand und Prozesszeitausfall. Gleichzeitig wirkt sich dies in einer verbesserten Reproduzierbarkeit der Prozesse als auch in einer verbesserten Produkthomogenität aus (axiale Homogenität des Sootkörpers bzw. Quarzglases).

| **Bei-spiel** | **BET [m²/g]** | **Systemdruckanstieg ΔP/kg verdampftes OMCTS [mbar/kg]** | **Prozessstablität/ Wartungsaufwand** | **Kommentar** |
|---|---|---|---|---|
| 1 | 1,5 | 0,1 - 0,2 | - | |
| 2 | - | > 1 | -- | ohne Silica-Schüttung; Druckanstieg zu hoch |
| 3 | 4 | 0,005 | + | |
| 4 | 23 | 0,0007 | ++ | |
| 5 | 96 | < 0,0002 | +++ | |
| 6 | 212 | < 0,0004 | +++ | |
| 7 | 290 | < 0,0002 | +++ | |
| 8 | 430 | < 0,0005 | +++ | |

## Patentansprüche

1. Verfahren zur Herstellung von synthetischem Quarzglas, umfassend die folgenden Verfahrensschritte:
(a) Verdampfen eines Einsatzmaterials, das mindestens eine polymerisierbare Polyalkylsiloxanverbindung enthält, unter Bildung eines Einsatzmaterialdampfes;
(b) Durchleiten des aus Verfahrensschritt (a) resultierenden Einsatzmaterialdampfes durch mindestens eine Reinigungsvorrichtung, um den Einsatzmaterialdampf zu reinigen;
(c) Zuführen des aus Verfahrensschritt (b) resultierenden gereinigten Einsatzmaterialdampfes zu einer Reaktionszone, in dem der Einsatzmaterialdampf durch Oxidation und/oder durch Hydrolyse zu SiO₂-Partikeln umgesetzt wird; und
(d) Abscheiden der aus Verfahrensschritt (c) resultierenden SiO₂-Partikel auf einer Ablagerungsfläche,
(e) gegebenenfalls Trocknen und Verglasen der aus Verfahrensschritt (d) resultierenden SiO₂-Partikel unter Bildung von synthetischem Quarzglas,
**dadurch gekennzeichnet, dass** die mindestens eine Reinigungsvorrichtung des Verfahrensschritts (b) eine Schüttung aus porösen Silica-Partikeln umfasst, welche eine spezifische Oberfläche von mindestens 2 m²/g aufweisen, wobei die spezifische Oberfläche bestimmt wird durch eine Messung gemäß Brunauer, Emmett und Teller (BET-Oberfläche).

2. Verfahren nach Anspruch 1, **dadurch gekennzeichnet, dass** die Schüttung der porösen Silica-Partikel eine Korngrößenverteilung aufweist, in der mindestens 75 Gew.-% der Partikel einen Durchmesser von 50 bis 4000 µm aufweisen.

3. Verfahren nach einem der Ansprüche 1 oder 2, **dadurch gekennzeichnet, dass** die Schüttung der porösen Silica-Partikel einen Anteil an Korngrößen < 50 µm von höchstens 20 Gew.-% aufweist.

4. Verfahren nach einem der Ansprüche 1 bis 3, **dadurch gekennzeichnet, dass** die Rütteldichte der Schüttung der porösen Silica-Partikel 0,5 bis 3 g/cm³ beträgt.

5. Verfahren nach einem der Ansprüche 1 bis 4, **dadurch gekennzeichnet, dass** die Anströmgeschwindigkeit des Einsatzmaterialdampfes im Verfahrensschritt (b) 0,01 bis 2 m/s beträgt.

6. Verfahren nach einem der Ansprüche 1 bis 5, **dadurch gekennzeichnet, dass** die Schütthöhe der Schüttung der porösen Silica-Partikel parallel zur Flussrichtung des Einsatzmaterialdampfes 10 mm bis 300 mm beträgt.

7. Verfahren nach einem der Ansprüche 1 bis 6, **dadurch gekennzeichnet, dass** das flüssige Einsatzmaterial der mindestens einen polymerisierbaren Polyalkylsiloxanverbindung vor der Verdampfung keiner Festphasenextraktion ausgesetzt wird.

8. Verfahren nach einem der Ansprüche 1 bis 7, **dadurch gekennzeichnet, dass** die Polyalkylsiloxanverbindung ausgewählt wird aus der Gruppe, bestehend aus Hexamethylcyclotrisiloxan (D3), Octamethylcyclotetrasiloxan (D4), Dekamethylcyclopentasiloxan (D5), Decamethylcyclohexasiloxan (D6), Tetradekamethylcycloheptasiloxan (D7), Hexadecamethylcyclooctasiloxan (D8), deren linearen Homologen und beliebigen Mischungen der vorgenannten Verbindungen.

9. Verfahren nach einem der Ansprüche 1 bis 8, **dadurch gekennzeichnet, dass** der Einsatzmaterialdampf zusätzlich ein Inertgas umfasst.

10. Verfahren nach einem der Ansprüche 1 bis 9, **dadurch gekennzeichnet, dass** der Druckabfall des Einsatzmaterialdampfes durch die Reinigung in Verfahrensschritt (b) 2 bis 750 mbar beträgt.

11. Vorrichtung zur Herstellung eines synthetischen Quarzglases, **gekennzeichnet durch** die folgenden Bestandteile:
mindestens eine Verdampferzone (1) zum Verdampfen mindestens eines Einsatzmaterials, das mindestens eine polymerisierbare Polyalkylsiloxanverbindung enthält, unter Bildung eines Einsatzmaterialdampfes;
mindestens eine Reinigungsvorrichtung (2), in welche der aus der mindestens einen Verdampferzone (1) resultierende Einsatzmaterialdampf geführt wird und welche eine Schüttung aus porösen Silica-Partikeln umfasst, welche eine spezifische Oberfläche von mindestens 2 m²/g aufweisen, wobei die spezifische Oberfläche bestimmt wird **durch** eine Messung gemäß Brunauer, Emmett und Teller (BET-Oberfläche);
mindestens eine Reaktionszone (3), in welche der aus der mindestens einen Reinigungsvorrichtung (2) resultierende gereinigte Einsatzmaterialdampf geführt wird und in welcher das Einsatzmaterial **durch** Pyrolyse oder **durch** Hydrolyse zu SiO₂-Partikeln umgesetzt wird; und
mindestens eine Abscheidezone (4) mit einer Ablagerungszone für die aus der Reaktionszone (3) resultierenden SiO₂-Partikel unter Bildung von synthetischem Quarzglas.

12. Vorrichtung nach Anspruch 11, **dadurch gekennzeichnet, dass** die Reinigungsvorrichtung (2) zusätzlich mindestens ein Gewebe (7) umfasst.

13. Vorrichtung nach Anspruch 12, **dadurch gekennzeichnet, dass** das mindestens eine Gewebe (7) so angeordnet ist, dass der Einsatzmaterialdampf, welcher aus der Verdampferzone (1) geführt wird, durch das mindestens eine Gewebe (7) geleitet wird, bevor der Einsatzmaterialdampf mit der Schüttung aus porösen Silica-Partikeln in Kontakt tritt.

14. Verwendung einer Schüttung aus porösen Silica-Partikeln zur Reinigung eines Einsatzmaterialdampfes, der mindestens eine polymerisierbare Polyalkylsiloxanverbindung enthält, wobei die porösen Silica-Partikel eine spezifische Oberfläche von mindestens 2 m²/g aufweisen und wobei die spezifische Oberfläche bestimmt wird durch eine Messung gemäß Brunauer, Emmett und Teller (BET-Oberfläche).

15. Synthetisches Quarzglas, erhältlich durch das Verfahren nach einem der Ansprüche 1 bis 10.
